# EUROPEAN PATENT APPLICATION

(11) **EP 4 007 140 A1**
(43) Date of publication of application: **01.06.2022**
(21) Application number: 20210157.2
(22) Date of filing: 27.11.2020
(51) Int. Cl.: H02M 1/36, H02M 1/08, H02M 3/335, H02M 1/00

(54) **POWER CONVERTER CONTROLLER, POWER CONVERTER AND METHOD FOR OPERATING A POWER CONVERTER**

(71) Applicant: Infineon Technologies Austria AG, 9500 Villach (AT)
(72) Inventor: FAHLENKAMP, Marc, 82538 Geretsried (DE); LI, Dong, 573911, Singapore (SG); AUSSERESSE, Pierrick, 80636 München (DE); KOK, Siu Kam, 389754, Singapore (SG); LUO, Jun Yang, 120359, Singapore (SG)
(74) Representative: Sticht, Andreas

(57) **Abstract**

Power converter controllers, power converters and corresponding methods are provided. During a transitioning operation, a primary side switch transistor (12) of a power converter is turned on with a lower driving strength, whereas during normal operation it is turned on with a higher driving strength.

## Description

### TECHNICAL FIELD

The present application relates to power converter controllers, power converters including such power converter controllers and to corresponding methods of operating power controllers.

### BACKGROUND

Power controllers are devices, which convert an input electrical power to an output electrical power. For example, an input electrical power derived from a mains power may be converted to an output electrical power (current/ voltage) suitable to power an electrical device.

Many electrical devices include such power converters or come with separate power converters, to be plugged into a mains supply socket. For example, an electrical device or appliance may require a comparatively low DC (direct current) voltage like 5 V, 12 V etc., and the power converter converts the mains voltage, for example 230 V AC (alternating current) as common in some European countries or 120 V AC as common in the USA, to the voltage required by the . Some power converters are even adapted to convert varying input voltages to the same output voltage, thus enabling a device to operate in different countries.

Many power converters nowadays are based on switched mode power supplies (SMPS), where a primary side switch is operated for example according to a pulse width modulation scheme or similar scheme to selectively provide power to a secondary side, that includes the output of the switched mode power supply. Examples for such switched mode power supplies include flyback converters and similar topologies, where the primary side is galvanically isolated from the secondary side by a transformer. On a secondary side of such power converters, a synchronous rectifier (SR) may be employed to provide a rectified output voltage.

In such implementations, so-called zero voltage switching (ZVS) may be employed. Zero voltage switching means that the primary side switch mentioned above is turned on at times when there is zero or only a comparatively small voltage drop over the primary side switch. This may help to reduce switching losses.

However, there may be situations where zero voltage switching is not yet active, for example during a startup phase of the power converter. During such a phase, the primary side switch may be switched on at higher voltages across the switch, also referred to as hard switching. This may in turn lead to voltage spikes at a synchronous rectifier switch, which therefore has to be designed to withstand such voltages.

### SUMMARY

A power converter controller as defined in claim 1, a power converter as defined in claim 8 and a method as defined in claim 10 are provided. The dependent claims define further embodiments.

According to an embodiment, a power converter controller is provided, configured to control a primary side switch transistor, which is configured to provide power to an output of the power converter, wherein the power converter controller is configured to:
turn the primary side switch transistor on with a lower driving strength when switching during a transitioning operation, and turning the primary side power switch on with a higher driving strength when switching during normal operation.

According to another embodiment, a power converter, is provided, including the primary side switch transistor mentioned above and the power converter controller mentioned above.

According to a further embodiment, a method is provided, comprising:
turning on a primary side switch transistor of a power converter with a lower driving strength when switching during a transitioning operation, and
turning the primary side switch transistor on with a higher driving strength when switching during normal operation.

The above summary is merely intended to give a brief overview over some embodiments and is not to be construed as limiting in any way, as other embodiments may include other features than the ones described above.

### BRIEF DESCRIPTION OF THE DRAWINGS

Fig. 1 is a block diagram of a power converter according to an embodiment.
Fig. 2 is a flowchart illustrating a method according to an embodiment.
Fig. 3 is a circuit diagram of a power converter according to an embodiment.
Fig. 4 is a diagram illustrating operation according to an embodiment.
Figs. 5A to 5C illustrate example voltages and currents in embodiments and comparative examples.
Fig. 6 is a diagram illustrating a driver usable in some embodiments.
Fig. 7 is a diagram illustrating operation of some embodiments.
Fig. 8 is a circuit diagram of a power converter according to a further embodiment.
Fig. 9 is a diagram illustrating zero voltage switching of the embodiment of Fig. 8.

### DETAILED DESCRIPTION

In the following, various embodiments will be described in detail referring to the attached drawings. It should be noted that these embodiments are given by way of example only and are not to be construed in a limiting sense. For example, while embodiments may be described comprising a plurality of features (elements, devices, components, acts, events, steps etc.), in other embodiments some of these features may be omitted and/or may be replaced by alternative features. Furthermore, in addition to the features explicitly shown and described, further features, for example features provided in conventional power converter controllers, power converters or methods associated therewith, may be provided. For example, various embodiments relate to a specific control of a primary side transistor switch of a power converter, for example in certain phases of operation. Apart from this control, power converter controllers, power converters or methods may employ conventional features, which will therefore not be described in greater detail.

Features from different embodiments may be combined unless noted otherwise. Variations and modifications described with respect to one of the embodiments may also be applied to other embodiments and will therefore not be described repeatedly.

Embodiments described herein use switch transistors. Transistors generically may be described as including a control terminal and two load terminals. In case of a bipolar transistor, the load terminals correspond to the collector and emitter terminal, and the control terminal corresponds to the base terminal. In case of a field-effect transistor like a metal oxide semiconductor field effect transistor (MOSFET), the load terminals correspond to the source and drain terminals, and the control terminal corresponds to the gate terminal. In case of an insulated gate bipolar transistor, the load terminals correspond to the collector and emitter terminals, and the control terminal corresponds to the gate terminal. While field-effect transistors are used as examples in some of the embodiments discussed herein, it is to be understood that in other embodiments, other types of transistors may be used. Moreover, while transistors may be based on silicon as a material, in other embodiments other materials, like silicon carbide (SiC) or III-V components like gallium arsenide may be used as base materials for transistors. Furthermore, a transistor may be built of a plurality of transistor cells for higher voltage applications.

A transistor is described as "on", when it is conducting between its load terminals with a low resistance (also referred to as on-resistance), and described as "off", when it essentially provides an electrical insulation (possibly apart from some very small leakage currents, which may happen in real implementations) between its load terminal.

The transition for example from an off-state to an on-state when turning on the transistor may take at certain time, which depends on a driving strength of a driver. For example, in case of a field-effect transistor, by sourcing or sinking a high gate current, a fast switching may occur, transitioning to a low on-resistance fast, whereas for lower gate currents, the switching may be slower, transitioning through higher on-resistances for a longer time. Driving a transistor to turn on with a lower driving strength than a maximum driving strength available or a maximum driving state used during a normal operation will also be referred to as weak turn-on herein. Some embodiments, as will be discussed below in detail, use such a weak turn-on in some phases of operation, whereas during normal operation, a regular turn-on is used, also referred to as hard turn on.

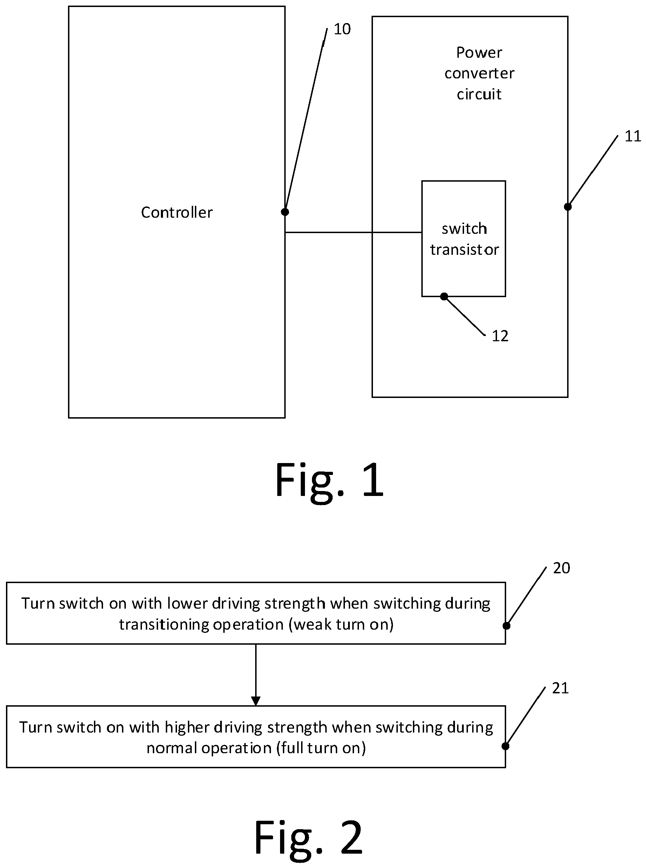

Turning now to the figures, Fig. 1 is a block diagram illustrating a power converter according to an embodiment.

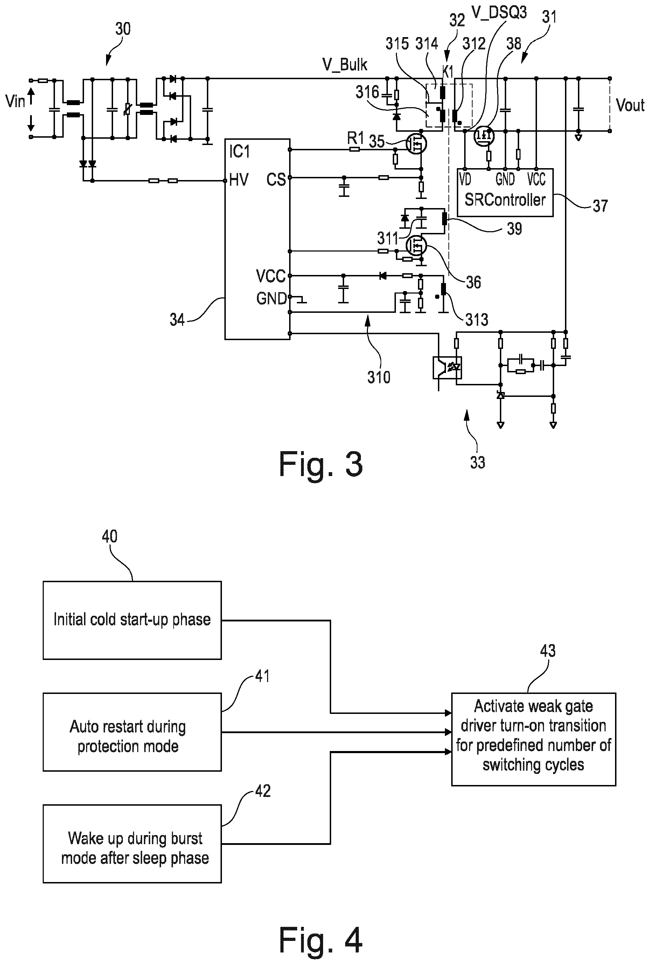

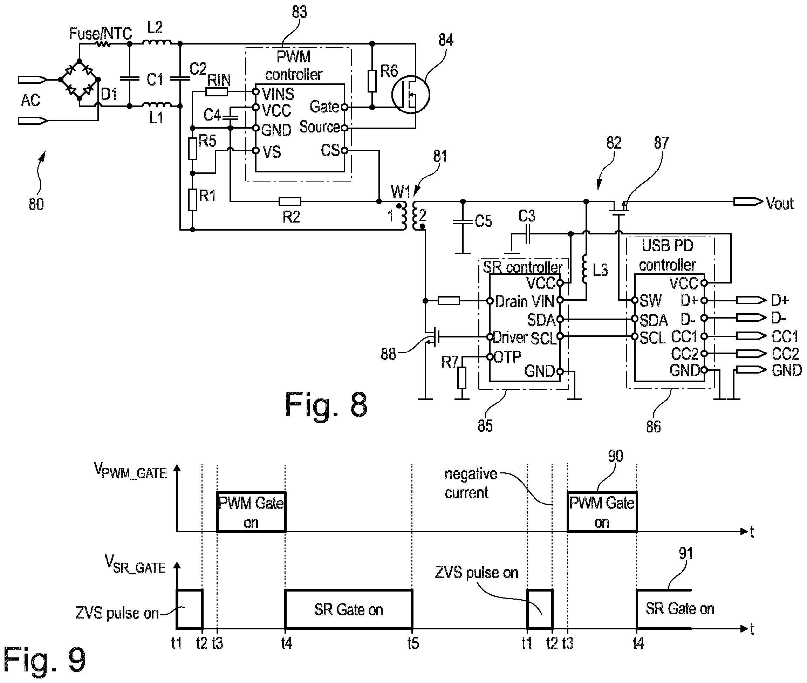

The power converter of Fig. 1 comprises a power converter circuit 11 controlled by a power converter controller 10 (shortly referred to as controller in the following). Power converter circuit 11 may be implemented according to various topologies, for example a flyback converter topology or another topology where a primary side is receiving an input power is galvanically isolated (for example by a transformer) from a secondary side providing an output power. Controller 10 controls operation of power converter circuit 11. Controller 10 need not be a single entity, but may be distributed among various entities. For example, for power converter circuits including a primary side galvanically isolated from a secondary side, controller 10 may, but need not, include separate controller entities for primary side and secondary side. More specific examples will be discussed further below, in particular referring to Figs. 3 and 8.

Power converter 11 comprises a primary switch transistor 12. Primary side switch transistor is selectively operated to provide power to an output to the power converter. For example, switch transistor 12 may be used to selectively provide power to a primary winding of the above-mentioned transformer, which is then transferred to the secondary side and ultimately to the output. The term "a" primary side switch transistor 12, in this respect, is not to be construed as being limited to a single switch transistor, and depending on topology of power converter circuit 11 also more than one switch transistor may be used. Switch transistor 12 may for example be operated according to a pulse width modulation scheme controlled for example based on an output of the power converter circuit 11 (for example to regulate an output voltage to a desired level), or based on a primary side current through primary side switch transistor 12, or both. Other control schemes used in conventional power converters may also be applied.

In some embodiments, the power converter of Fig. 1 employs zero voltage switching (ZVS). As already discussed in the background section, zero voltage switching relates to a technique where primary side switch transistor 12 is switched on only when there is a low voltage drop across its load terminals, which may help to reduce switching losses and, as will be explained further below in more detail, which also may reduce voltage spikes in power converter circuit 11. While the term zero voltage switching (ZVS) is used herein, it is to be understood that the switching need not be exactly at a voltage drop of zero. Depending on topology, some effort is required to bring the voltage across switch transistor 12 to 0 V when turning switch transistor 12 on, for example by current injection schemes, examples for which will be discussed below. Depending on implementation, the effort required increases the closer the voltage across switch transistor 12 is to be brought to zero. Therefore, depending on implementation, a compromise may be made between the voltage remaining across switch transistor 12 when turning switch transistor 12 on and the effort required for it. Consequently, as used herein, zero voltage switching generally relates to techniques which are employed to reduce the voltage across switch transistor 12 when turning switch transistor 12 on, for example to at most 20 % of a peak voltage across switch transistor 12, or to at most 10 % of the peak voltage, and is not to be construed as indicating a switching at exactly 0 V.

Depending on implementation, zero voltage switching may not be always available. For example, at start up, some time may be required until zero voltage switching is established. Depending on implementation, as will be explained for some examples below, for example a capacitor needs to be charged prior to zero voltage switching being available, or an output voltage of the power converter circuit has to be built up before zero voltage switching becomes available. Other examples include the transitioning in a burst mode of the power converter. A burst mode in some power converters is entered when there is little or no load at the output of the power converter, meaning that a continuous operation is not necessary to provide for example a desired output voltage. In such a case, the power converter is only operated normally (by switching primary side switch transistor 12, for example) during certain times, referred to as bursts, which may be initiated for example if the output voltage drops below a predefined lower threshold value. The burst then may for example last until the output voltage reaches a predefined upper threshold value, after which a sleep phase is entered where primary side power switch remains turned off until the voltage drops to the lower threshold value again. Other implementations of burst modes are also possible. Also when transitioning from the sleep phase to a burst (also referred to as wake-up), zero voltage switching may not be available initially.

Such phases where zero voltage switching may not be available are referred to as transitioning operation herein, as the power converter transitions from one state to another, for example from a turned off-state to normal operation at start up or from a sleep phase to a burst.

Therefore, during such transitioning operation so-called hard switching may occur in contrast to zero voltage switching, in normal operation. Hard switching means that a higher voltage than during zero voltage switching may be present across the load terminals of primary side switch transistor 12 when turning primary side switch transistor 12 on. This in turn may lead to voltage spikes and the like, for example across synchronous rectifier switches on a secondary side.

To reduce such voltage spikes and possibly other problems associated with hard switching, controller 10 is configured to control switch transistor 12 with a lower driving strength during transitioning operation, which is also referred to as weak turn-on. For example, a lower driving current may be used, which may be supplied via a higher driving resistor, for example gate resistor, or using an adjustable current source. With such a lower driving strength, the switch transistor transitions slower to a fully turned on-state, exhibiting a higher on-resistance until fully turned on. While this higher on-resistance may lead to higher losses, as this weak turn-on is also only applied during transitioning operation, in many implementations it has a negligible impact on the overall power consumption and losses of the power converter. This weak turn-on, as will be explained below in more detail, may contribute to avoiding voltage spikes and may for example enable the use of synchronous rectifier transistors designed for lower voltages, and which are thus cheaper to implement.

During normal operation, i.e. after the transitioning operation, controller 10 controls the switch transistor with a higher driving strength, which is also referred to as full turn-on, for example with a higher driving current as the gate current, to quickly turn primary side switch transistor 12 on.

Fig. 2 is a flowchart illustrating a method according to an embodiment. The method of Fig. 2 may be implemented in the power converter of Fig. 1, but may also be implemented in other power converters, like the power converters described further below. In order to avoid repetitions, the method of Fig. 2 will be described referring to the previous explanations with respect to Fig. 1.

At 20 in Fig. 2, the method comprises turning a switch of a power converter circuit on with a lower driving strength when switching during transitioning operation, i.e. perform a weak turn-on as explained below during the transitioning operation. The transitioning operation may for example be at start up, at wake up during burst mode after a sleep phase or the like. In some embodiments, this may be limited to a single switching cycle, or may be performed until some predetermined condition is met, for example an output voltage V of the power converter reaching a threshold value.

At 21, the method comprises turning the switch on with a higher driving strength, hard turn-on, when switching during normal operation, for example in a continuous operating mode or during bursts in the burst mode (the operation during the bursts essentially corresponds to the operation during continuous operation, with the exception that it is limited to bursts).

Next, more specific examples for power converters where techniques as discussed above may be used will be given.

Fig. 3 illustrates a power converter according to an embodiment having a forward mode current injection flyback converter topology. This topology will now be briefly described. As apart from the control of a switch transistor 35 in various operation modes, the topology corresponds to a conventional topology, not every detail will be described, but only a general overview is given.

The power converter of Fig. 3 receives an input voltage Vin, for example a mains voltage between about 80 and about 260 V AC, at an input stage 30. Input stage 30 includes a rectifier generating a DC voltage from the AC input voltage and may also include a power factor correction (PFC).

Using a primary side switch transistor 35 controlled by a primary side controller 34, power based on this DC voltage is selectively provided to a primary side winding 316 of a transformer 32 and transferred to a secondary winding 312 of transformer 32 coupled to a secondary side 31. Using a synchronous rectifier switch transistor 38 controlled by a synchronous rectifier controller 37, then a DC output voltage Vout is generated.

An indication of the voltage Vout is provided to primary side controller 34 using a feedback path 33. For galvanic isolation, feedback path 33 may include for example an optocoupler. The control of primary side switch transistor 35 by primary side controller 34 may be based on the feedback thus received, for example to regulate the output voltage Vout to a value needed to supply a device or an appliance with power.

Moreover, using an auxiliary winding 313, primary side controller 34 may measure a primary side current and also use this as a control.

Primary side controller 34 is an example for controller 10 of Fig. 1. In other implementations, primary side controller 34 together with synchronous rectifier controller 37, may be an example for controller 10 of Fig. 1. Primary side switch transistor 35 is an example for primary side switch transistor 12 of Fig. 1.

In a flyback topology as shown in Fig. 3, secondary side winding 312 and primary side winding 316 are coupled in opposite directions, as illustrated by dots. When turning on primary side switch 315, a reflected voltage jump can be seen at secondary side winding 312 and therefore at the drain node of synchronous rectifier switch transistor 38, the amplitude of this voltage jump depending on the input voltage generated by input stage 30 and the transformer winding ratio of primary side winding 316 and secondary side winding 312.

Furthermore, due to a parasitic leakage inductance 314, which is present depending on transformer implementation, and additional voltage spike is superimposed at a node 315 when the turn-on transition of primary side switch 15 is finished, i.e. primary side transistor 35 is fully turned on, which is also reflected to the secondary side 31 and therefore also to synchronous rectifier switch transistor 38. The amplitude of this voltage spike depends strongly on the slope of the voltage dV/dt of the drain voltage of primary side switch 35 during turning on of primary side switch 35.

When applying zero voltage switching operation, this dV/dt is very low, as the drain voltage of primary side switch 35 in this case is already close to zero. In a forward mode current injection flyback topology (FMCI) as shown in Fig. 3, the zero voltage switching is obtained by injecting a current to transformer 32 through an auxiliary winding 39 controlled by a switch transistor 36. As this voltage spike mentioned above is avoided or reduced by applying zero voltage switching, in principle for normal operation including zero voltage switching, synchronous rectifier switch 38 need not be designed to withstand high voltage spikes.

However, as already generally explained referring to Figs. 1 and 2, in some cases of transitioning operation no zero voltage is possible. For example, for the forward mode current injection using switch transistor 36 and auxiliary winding 39, a capacitor 311 has to be charged first. This charging of capacitor 311 occurs via transformer 32 to auxiliary winding 39 when turning on primary side switch 35. Therefore, capacitor 311 is only charged after the first switching cycle, and is not charged for example at a startup (cold start) of the power converter of Fig. 3, when starting a burst in a burst mode after a longer sleep phase, or at an auto-restart during a so-called protection mode. In such cases, primary side switch 35 is switched with a comparatively high voltage across its load terminals (in this case source and drain terminals), which may lead to high current spikes at synchronous rectifier switch transistor 38.

Corresponding to what has been explained for Figs. 1 and 2, in the embodiment of Fig. 3, in contrast to conventional approaches, controller 34 is configured to control primary side switch transistor 35 for a weak turn-on, which reduces the voltage spike, during such transitioning operation. In case of the forward mode current injection flyback topology of Fig. 3, in many implementations this needs to be done only for a single switching cycle. After this switching cycle then capacitor 311 is charged, and zero voltage switching with full turn-on is used. In further embodiments capacitor 311 may be charged over several switching cycles, for example a predefined number of switching cycles as explained below.

For the field-effect transistor implementation of primary side switch 35 shown in Fig. 3, for example for weak turn-on a lower gate drive current may be used for switching primary side switch transistor 35 on, whereas in normal operation, a higher gate current may be used. This reduced turn-on current might be in the order of 1/4 or even lower, depending on the amount of total leakage inductance causing the superimposed voltage ringing at the secondary side synchronous rectifier switch transistor 38.

Fig. 4 is a diagram illustrating some possible transitioning operation examples 40, 41 and 42 for a power converter like the one shown in Fig. 3, where, at 43, a weak gate driver turn-on, i.e. a weak turn-on for primary side switch transistor 35, is performed for a predefined number of switching cycles. In some implementations, for example in the topology of Fig. 3, the predefined number may be one, i.e. the weak turn-on may be limited to one switching cycle. In other embodiments, the predefined number may be higher, thus extending the weak turn-on over more than one switching cycle. For example, the predefined number may be 10 or less, 5 or less or 3 or less. Higher numbers may also be used, depending on implementation.

At 40, the transitioning operation compromises an additional cold startup phase, where the power converter is turned on initially. At 41, the transitioning operation comprises an auto-restart during a protection mode. A protection mode may be entered due to e.g. an overload condition. The switching activity is then stopped for a longer time period (e.g. 3s). Then a next startup cycle is automatically initiated as seen for a cold startup. At 42, the transitioning operation is a wake-up to burst mode after a sleep phase. In the topology of Fig. 3, after such a sleep phase, capacitor 311 may be fully or partially discharged, not being able to support a proper current injection for achieving ZVS condition at power switch 35, such that also here the weak turn-on at 43 may be activated for a predefined number of switching cycles, for example one switching cycle, before normal operation during burst with full turn-on is performed. It should be noted that the predefined number at 43 may be different or may be the same for different transitioning operations 40 to 42.

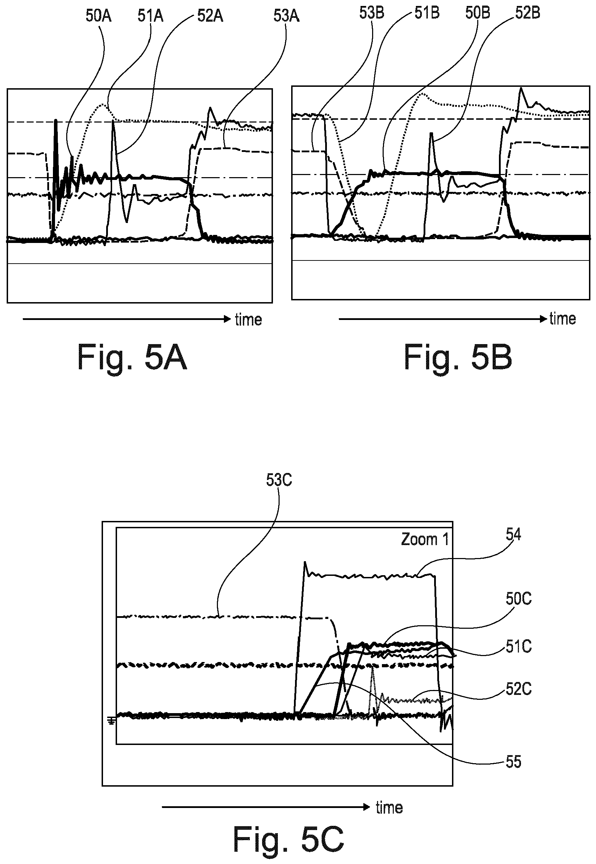

To illustrate further, Figs. 5A to 5C show measurement results for turning on a primary side switch transistor like primary side switch transistor 35 under various conditions. Fig. 5A shows signals for a "hard" turn-on without zero voltage switching, for example at start up, without the measures discussed herein for comparison purposes. Fig. 5B shows signals for turning on during zero voltage switching. Fig. 5C shows signals for turning on without zero voltage switching, for example at start up, but with a weak turn-on as discussed herein. The signal waveforms of Figs. 5A to 5C serves only as illustration examples, and depending on implementation, input voltages, output voltage requirements and other parameters signal waveforms may vary.

In each of Figs. 5A to 5C, respective curves 50 to 53 are shown, labeled 50A to 53A in Fig. 5A, 50B to 53B in Fig. 5B and 50C to 53C in Fig. 5C.

The respective curves 50 show the voltage at a drain terminal of synchronous rectifier switch transistor 38 of Fig. 3 over time, respective curves 51 show the voltage at capacitor 311 of Fig. 3 over time, i.e. reflect the charging state of capacitor 311, curves 52 illustrate the voltage at a drain terminal of switch transistor 36 used for current injection to obtain zero voltage switching, and respective curves 53 illustrate a voltage at the drain terminal of primary side switch transistor 35 of Fig. 3.

Fig. 5A shows example signals for a full or hard turn-on at start up, i.e. without the weak turn-on as discussed herein. Therefore, as can be seen in Fig. 5A from curve 53A, the voltage at primary side switch transistor 35 is high when the switching starts, and as capacitor 311 is discharged at the beginning this voltage (curve 51A), is not reduced by current injection.

As can be seen from curve 50A, this results in a high voltage spike at synchronous rectifier switch transistor 38.

As can be seen further from curve 51A, through the switching operation capacitor 311 is charged, such that at the end of this "hard switching cycle" capacitor 311 is charged for the next switching cycle.

Fig. 5B illustrates such a next switching cycle, which corresponds to normal operation. As can be seen from curve 51B, capacitor 311 is charged at the end of the switching cycle. As can be further seen from curves 52B and 53B, through current injection (the decrease of curve 50A at the beginning of the switching cycle) curve 53B comparatively slowly decreases, corresponding to a small dV/dt. Consequently, as seen in curve 50B, no large voltage spike occurs.

Fig. 5C shows a case in a similar situation as Fig. 5A, i.e. for example at start up, when capacitor 311 according to curve 51C is not charged. However, here a weak turn-on is used. In Fig. 5C, in addition to curves 50C to 53C, a curve 54 denotes a nominal gate control signal controlling e.g. a drive to start the weak turn-on, and a curve 55 denotes the actual gate voltage. As can be seen, the weak turn-on leads to a longer time period where the gate voltage stays at a lower level as shown by curve 54, resulting in a lower dV/dt of the drain voltage illustrated by curve 53C. As can be seen, also here no high voltage spike in curve 50B occurs. Therefore, by providing a weak turn-on during transitioning operation, voltage spikes for example at a switch of a synchronous rectifier like switch transistor 38 of Fig. 3 may be avoided, and in some embodiments therefore a synchronous rectifier switch transistor designed for lower voltages (i.e. not designed to withstand voltage spikes as shown in Fig. 5A) may be used, as such voltage spikes may be suppressed in some embodiments discussed herein by using the weak turn-on during transition operation.

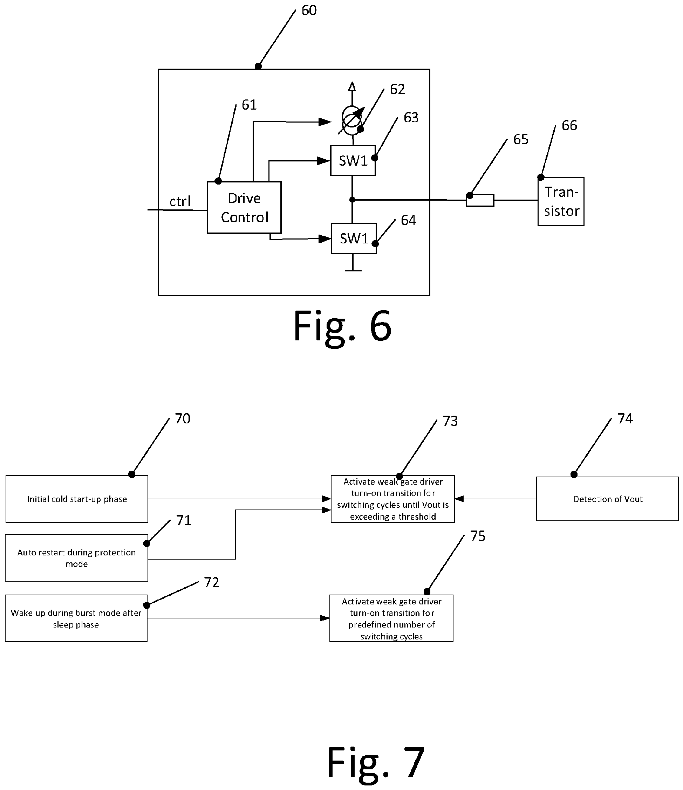

Fig. 6 illustrates an example implementation of a driver usable for weak turn-on and hard turn-on. A driver 60 in Fig. 6 is used to drive a transistor 66 via a driving resistor 65 (for example gate resistor in case of a field effect transistor). Transistor 66 may correspond to primary side switch transistor 12 of Fig. 1 or to primary side switch transistor 35 of Fig. 3.

Driver 60 is a push-pull driver including a high-side switch 63 and a low-side switch 64 coupled to a drive controller 61, which controls high-side switch 63 and low-side switch 64 according to a control signal ctrl. High-side switch 63 and low-side switch 64 may be implemented as switch transistors. Control signal ctrl indicates the desired switching of transistor 66 and may be provided according to any conventional techniques, for example based on a feedback from the output voltage of a power converter etc. as discussed above.

For turning transistor 66 on, high-side switch 63 is turned on and low-side switch 64 is turned off, and conversely, for turning transistor 66 off, low-side switch 64 is turned on and high-side switch 63 is turned off.

Furthermore, driver 60 comprises an adjustable current source 62 coupled between high-side switch 63 and a positive supply voltage. Adjustable current source may for example be provided using a plurality of switchable current sources in parallel, which may be activated selectively, variable current sources controlled for example by a transistor in a linear regime, or any other conventional form of adjustable current sources.

For a weak turn-on of transistor 66, drive controller 61 controls variable current source 62 to provide a relatively low current. For a hard turn-on, drive controller 61 controls variable current source 62 to provide a relatively high current. Low current causes a slower turn-on of transistor 66.

In other implementation, instead of a variable current source, a variable resistor 65 may be provided, having a relatively high resistance for a weak turn-on and a relatively low resistance for a hard turn-on. Through the higher resistance for weak turn-on, also the drive current for transistor 66 is reduced. A weak turn-on may also be e.g. implemented by connecting instead of a variable current source 62 a second high-side switch with higher on-resistance Rdson in parallel to high-side switch 63.

A weak turn-on may also be used for other kinds of power converters than the one shown in Fig. 3, in particular power converters using zero voltage switching, that use a capacitor like capacitor 111 to be charged.

An example includes a forced frequency resonant (FFR) flyback converter or forced quasi resonant claim (FQR) flyback converter, where the current injection winding (winding 39 in Fig. 3) is coupled in an opposite direction to winding 316, and not in the same direction as in Fig. 3. In such a topology, sometimes even several hard switching cycles can be observed at start up until an output voltage is exceeding a certain level that supports a minimum precharge level of a resonant capacitor used for inserting enough negative transformer magnetization and thus obtain zero voltage switching.

For such converters, for a cold start, the weak turn-on may be performed until the output voltage reaches a sufficient value. Fig. 7 shows a diagram illustrating the operation for such a FFR/FQR flyback topology. Blocks 70 to 72 show different transitioning operations where a weak turn-on may be applied. For a wake-up during a burst mode after a sleep phase at 72, similar to 42 in Fig. 4, at 75 a weak gate driver turn-on transition, i.e. a weak turn-on, may be activated for a predefined number of switching cycles, as this in such topologies usually is sufficient to obtain zero voltage switching afterwards. Similar to Fig. 4, the predefined number may be 10 or less, 5 or less, 3 or less or only one, and may differ for the transitioning operations at 70 and 71 or may be the same.

For an initial cold startup phase at 70 or an auto-restart during protection mode as 71, (similar transitioning operations as 40 and 41 of Fig. 4), the output voltage is monitored at 74, and at 73 the weak gate driver turn-on transition, i.e. the weak turn-on, is activated for a plurality of switching cycles until the output voltage Vout exceeds a predefined threshold voltage.

As a further power converter application example, Fig. 8 illustrates a current mode flyback with multi-mode operation. The power converter includes an input stage 80, including a rectifier, and a primary side controller 83 controlling a primary side switch 84. The primary side is separated from a secondary side 82 via a transformer 81. The secondary side in this case includes two separate controllers 85, 86, controller 85 being a controller controlling a synchronous rectifier switch transistor 88, and controller 86 controlling a switch transistor 87. As this is also a per se conventional topology, it will not be discussed in further detail. Primary side switch 84 is a further example for switch transistor 12 of Fig. 1.

In this topology, zero voltage switching may be obtained by injecting a current from the secondary side 82 to the primary side via transformer 81, by controlling synchronous rectifier switch transistor 88. This is briefly illustrated in Fig. 9.

A curve 90 of Fig. 9 illustrates an example control signal for primary side switch 84, and a curve 91 shows an example for a control signal for synchronous rectifier switch transistor 88. For the normal synchronous rectifier operation, synchronous rectifier switch 88 is turned on essentially when primary side switch transistor 84 is turned off. In addition, to establish zero voltage switching, before primary side switch transistor 84 is turned on, a comparatively short pulse is provided from the secondary side to the primary side by turning synchronous rectifier switch transistor 88 on, labelled "ZVS pulse on" in Fig. 9.

Similar to what was explained above for the FFR/FQR topology, for this current injection from the secondary side to work, the output voltage Vout has to reach a certain level. Therefore, at start up, zero voltage switching may not be enabled.

To mitigate this, a similar scheme as illustrated in Fig. 7 may also be used for the topology of Fig. 8, i.e. activating a weak turn-on for primary side switch transistor 84 for several switching cycles upon start up or auto-restart until the output voltage Vout has reached a predefined level.

A further example for a topology where such a weak turn-on during transitioning operation may be used as in active clamp flyback topology, where zero voltage switching is provided when a resonant capacitor of an active clamp path is precharged. This is only achieved after the primary side switch is turned on the first time in a hard switching manner. Therefore, for the first switching cycle (transitioning operation upon startup) also a weak turn-on may be used.

Therefore, techniques discussed herein may be applied to various power converter topologies.

Some embodiments are defined by the following examples:
Example 1. A power converter controller configured to control a primary side switch transistor, which is configured to provide power to an output of the power converter, wherein the power converter controller is configured to:
   turn on the primary side switch transistor with a lower driving strength when switching during a transitioning operation, and turning the primary side power switch on with a higher driving strength when switching during normal operation.
Example 2. The power converter controller of example 1, wherein the transitioning operation includes one or more operations from the group consisting of an initial startup of the power converter, an auto-restart of the power converter during a protection mode, and a wake up during a burst mode after a sleep phase of the power converter.
Example 3. The power converter controller of example 1 or 2, wherein the power converter controller is configured to turn on the primary side switch transistor with lower driving strength during at least one type of transitioning operation for a predefined number of switching cycles.
Example 4. The power converter controller of example 3, wherein the predefined number is 10 or less, 5 or less, 3 or less, or one.
Example 5. The power converter controller of any one of examples 1 to 4, wherein the power converter controller is configured to turn the primary side switch transistor on with lower driving strength when switching during at least one further type of transitioning operation until an output voltage of the power converter has reached a predefined threshold.
Example 6. The power converter controller of any one of examples 1 to 5, wherein the power converter controller is configured to control the power converter for zero voltage switching of the primary side switch transistor during normal operation.
Example 7. The power converter controller of any one of examples 1 to 6, comprising a transistor driver including a variable current source and configured to provide a lower driving current for turning on with lower driving strength and a higher driving current for turning on with higher driving strength.
Example 8. A power converter, comprising:
   a power converter circuit including a primary side switch transistor, and the controller of any one of examples 1 to 7 controlling the primary side switch transistor .
Example 9. The power converter of example 8 is provided, wherein the power converter is a flyback converter.
Example 10. A method, comprising:
   turning on a primary side switch transistor of a power converter with a lower driving strength when switching during a transitioning operation, and
   turning the primary side switch transistor on with a higher driving strength when switching during normal operation.
Example 11. The method of example 10, wherein the transitioning operation includes one or more operations from the group consisting of an initial startup of the power converter, an auto-restart of the power converter during a protection mode, and a wake up during a burst mode after a sleep phase of the power converter.
Example 12. The method of example 10 or 11, wherein turning on the primary side switch transistor of the power converter with a lower driving strength comprises turning the primary side switch transistor on with lower driving strength during at least one type of transitioning operation for a predefined number of switching cycles.
Example 13. The method of example 12, wherein the predefined number is 10 or less, 5 or less, 3 or less, or one.
Example 14. The method of any one of examples 10 to 13, wherein turning on the primary side switch transistor of the power converter with a lower driving strength comprises turning the primary side switch transistor on with lower driving strength when switching during at least one further type of transitioning operation until an output voltage of the power converter has reached a predefined threshold.
Example 15. The method of any one of examples 10 to 14, further comprising controlling the power converter for zero voltage switching of the primary side switch transistor during normal operation.

Although specific embodiments have been illustrated and described herein, it will be appreciated by those of ordinary skill in the art that a variety of alternate and/or equivalent implementations may be substituted for the specific embodiments shown and described without departing from the scope of the present invention. This application is intended to cover any adaptations or variations of the specific embodiments discussed herein. Therefore, it is intended that this invention be limited only by the claims and the equivalents thereof.

## Claims

1. A power converter controller (10; 14; 83) configured to control a primary side switch transistor (12; 35; 66; 84), which is configured to provide power to an output of the power converter, wherein the power converter controller (10; 14; 83) is configured to:
turn on the primary side switch transistor (12; 35; 66; 84) with a lower driving strength when switching during a transitioning operation, and turning the primary side power switch on with a higher driving strength when switching during normal operation.

2. The power converter controller (10; 14; 83) of claim 1, wherein the transitioning operation includes one or more operations from the group consisting of an initial startup of the power converter, an auto-restart of the power converter during a protection mode, and a wake up during a burst mode after a sleep phase of the power converter.

3. The power converter controller (10; 14; 83) of claim 1 or 2, wherein the power converter controller (10; 14; 83) is configured to turn on the primary side switch transistor (12; 35; 66; 84) with lower driving strength during at least one type of transitioning operation for a predefined number of switching cycles.

4. The power converter controller (10; 14; 83) of claim 3, wherein the predefined number is 10 or less.

5. The power converter controller (10; 14; 83) of any one of claims 1 to 4, wherein the power converter controller (10; 14; 83) is configured to turn the primary side switch transistor (12; 35; 66; 84) on with lower driving strength when switching during at least one further type of transitioning operation until an output voltage of the power converter has reached a predefined threshold.

6. The power converter controller (10; 14; 83) of any one of claims 1 to 5, wherein the power converter controller (10; 14; 83) is configured to control the power converter for zero voltage switching of the primary side switch transistor (12; 35; 66; 84) during normal operation.

7. The power converter controller (10; 14; 83) of any one of claims 1 to 6, comprising a transistor driver (60) including a variable current source (62) and configured to provide a lower driving current for turning on with lower driving strength and a higher driving current for turning on with higher driving strength.

8. A power converter, comprising:
a power converter circuit (11) including a primary side switch transistor (12), and the controller of any one of claims 1 to 7 controlling the primary side switch transistor (12; 35; 66; 84).

9. The power converter of claim 8 is provided, wherein the power converter is a flyback converter.

10. A method, comprising:
turning on a primary side switch transistor (12; 35; 66; 84) of a power converter with a lower driving strength when switching during a transitioning operation, and
turning the primary side switch transistor (12; 35; 66; 84) on with a higher driving strength when switching during normal operation.

11. The method of claim 10, wherein the transitioning operation includes one or more operations from the group consisting of an initial startup of the power converter, an auto-restart of the power converter during a protection mode, and a wake up during a burst mode after a sleep phase of the power converter.

12. The method of claim 10 or 11, wherein turning on the primary side switch transistor (12; 35; 66; 84) of the power converter with a lower driving strength comprises turning the primary side switch transistor (12; 35; 66; 84) on with lower driving strength during at least one type of transitioning operation for a predefined number of switching cycles.

13. The method of claim 12, wherein the predefined number is 10 or less.

14. The method of any one of claims 10 to 13, wherein turning on the primary side switch transistor (12; 35; 66; 84) of the power converter with a lower driving strength comprises turning the primary side switch transistor (12; 35; 66; 84) on with lower driving strength when switching during at least one further type of transitioning operation until an output voltage of the power converter has reached a predefined threshold.

15. The method of any one of claims 10 to 14, further comprising controlling the power converter for zero voltage switching of the primary side switch transistor (12; 35; 66; 84) during normal operation.
